# EUROPEAN PATENT APPLICATION

(11) **EP 2 031 286 A1**
(43) Date of publication of application: **04.03.2009**
(21) Application number: 07744935.3
(22) Date of filing: 08.06.2007
(51) Int. Cl.: F16K 31/06, F02M 51/00, F02M 59/36, F02M 59/46

(54) **ELECTROMAGNETIC PROPORTIONAL CONTROL VALVE FOR FLOW RATE CONTROL AND FUEL SUPPLY PUMP**

(30) Priority: 16.06.2006 JP 2006167442
(71) Applicant: Bosch Corporation, Shibuya-ku Tokyo 150-8360 (JP)
(72) Inventor: TAKAHASHI, Satoshi, Matsuyama-shi, Saitama 355-8603 (JP)
(74) Representative: Knapp, Thomas
(86) International application number: PCT/JP2007/061615
(87) International publication number: WO 2007/145140

(57) **Abstract**

To provide an electromagnetic proportional control valve for flow rate control that can stably control the flow rate of a fluid without hindering the smooth axial direction movement of a mover and a fuel supply pump that is disposed with this electromagnetic proportional control valve.

An electromagnetic proportional control valve for flow rate control is disposed with a mover that moves in an axial direction inside a casing in response to an electric current flowing in a coil and proportionally controls the flow rate of a fluid by opening and closing a valve in response to the moving amount of the mover, wherein the electromagnetic proportional control valve for flow rate control is disposed with a fixed shaft that is fixed to the casing, the mover includes an insertion hole, both of whose axial direction end sides are open, and with a bearing member being disposed in the mover, and the fixed shaft is inserted into the insertion hole, whereby the mover is held in a state where the mover is slidable in the axial direction.

## Description

### TECHNICAL FIELD

The present invention relates to an electromagnetic proportional control valve for flow rate control and to a fuel supply pump. In particular, the present invention relates to an electromagnetic proportional control valve for flow rate control for proportionally controlling the flow rate of a fluid by controlling the lift amount of a valve body and to a fuel supply pump that is disposed with this electromagnetic proportional control valve.

### BACKGROUND ART

Conventionally, electromagnetic proportional control valves for flow rate control for controlling the flow rate of fuel and other fluids have been used in various devices. As one aspect of those devices, various accumulator fuel injection systems (CRS: Common Rail Systems) that accumulate high pressure fuel inside a common rail and inject and supply this high pressure fuel to plural cylinders of an internal combustion engine via injectors have been proposed.
These accumulator fuel injection systems are disposed with a fuel supply pump for pressure-feeding the high pressure fuel to the inside of the common rail, and the fuel that is sent to the inside of a fuel pressurization chamber of this fuel supply pump is controlled by the electromagnetic proportional control valve to an optimum flow rate that is commensurate with the operating state of the internal combustion engine.

This fuel supply pump is, for example, disposed with a rotatable cam inside a pump housing and is disposed with a plunger that slides inside a cylinder above the cam and pressurizes the fuel inside the fuel pressurization chamber. Further, above the cylinder, there is disposed a fuel inlet valve that supplies the fuel to the inside of the fuel pressurization chamber, and on the side of the fuel pressurization chamber, there is disposed a fuel outlet valve via a fuel passage. Moreover, the fuel supply pump is disposed with the electromagnetic proportional control valve that controls the flow rate of the fuel that flows into the fuel inlet valve, and the fuel whose flow rate has been controlled is supplied to the fuel pressurization chamber via the fuel inlet valve, is pressurized by the plunger that slides in accompaniment with the rotation of the cam, and is pressure-fed with respect to the common rail via the fuel outlet valve.

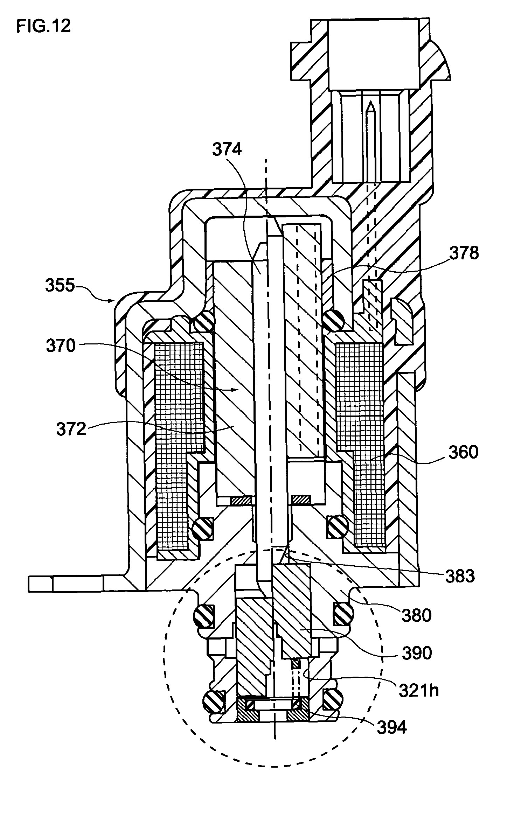

FIG. 12 shows an example of the configuration of an electromagnetic proportional control valve that is used for this purpose. In this electromagnetic proportional control valve, a circular cylinder-shaped solenoid 360 fits into the inner periphery of an outer casing 355, a mover 370 fits into the inner periphery of the solenoid 360, and a core 380 fits into an open portion of the outer casing 355 such that the opening is closed. Further, a spindle 374 of the mover 370 is supported and guided by a guide portion 383 of the core 380 and a bush 378 that serves as a guide portion on the other end side. Further, a valve member 390 that comprises a piston movably fits into a hole 321h in the core 380, and the valve member 390 moves by the energizing force of a coil spring 394 and the electromagnetic force of the solenoid 360 such that control of the flow rate of the fuel that passes therethrough becomes possible.

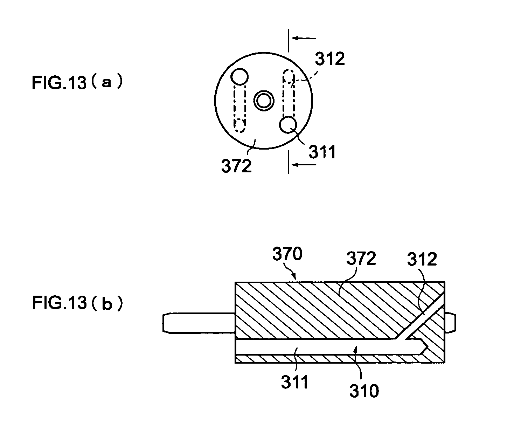

In this electromagnetic proportional control valve, the mover that moves is supported in plural places that are apart in the axial line direction thereof, but there has been proposed an electromagnetic proportional control valve that prevents sliding wear at contact portions of those support portions of the mover to obtain a proper sliding state and properly controls the common rail pressure so that the electromagnetic proportional control valve can prevent drawbacks such as abnormal noise of the engine and the like. More specifically, as shown in FIG. 13, this is a flow rate control valve that is configured such that a passage portion 311 that follows the axial line direction and a passage portion 312 that crosses the axial line direction are disposed with respect to a flow passage 310 inside an anchor 372 of the mover 370 and such that rotational force is applied to the mover 370 by a fluid that flows from a first chamber to a second chamber in both ends of the mover 370 or the opposite direction to thereby allow wear to be dispersed without becoming concentrated in one place (see Patent Document 1).
Patent Document 1: JP-A-2005-299683 (Claims and FIG. 5)

### DISCLOSURE OF THE INVENTION

### PROBLEM THAT THE INVENTION IS TO SOLVE

However, although the electromagnetic proportional control valve disclosed in Patent Document 1 can prevent uneven wear at the contact portions of the mover as a result of the mover rotating, when the anchor or the spindle comprises a metal member, there are many instances where a bearing member that is disposed in the contact portion between a barrel and the mover in the outer casing is a material that deforms more easily than the mover, so there is the potential for the bearing member to cause uneven wear such that a proper sliding state of the mover is not obtained and for proper control of the common rail pressure to become difficult.
In particular, the electromagnetic proportional control valve disclosed in Patent Document 1 is one where the support portions of the mover are respectively disposed in the outer casing and the barrel that are different members and where centering precision when assembling the outer casing and the barrel greatly affects the occurrence of sliding wear of the mover or the bearing member. Consequently, there are instances where the clearance between the mover and the outer casing and the clearance between the mover and the barrel must be relatively largely ensured, the electromagnetic force that acts in the circumferential direction becomes larger, and it becomes easier for uneven wear of the bearing member to arise.

Thus, as a result of their extensive investigations, the inventors of the present invention have discovered that uneven wear of the bearing member can be reduced while improving the centering precision between the mover and the axial center by placing, in the axial center of the mover, a fixed shaft that is fixed to the casing and disposing a bearing member in the mover to allow the mover to be slidingly held on the fixed shaft, and have thereby completed the present invention.
That is, it is an object of the present invention to provide an electromagnetic proportional control valve for flow rate control that can stably control the flow rate of a fluid without hindering the slidability of the mover and a fuel supply pump that is disposed with this electromagnetic proportional control valve.

### MEANS FOR SOLVING THE PROBLEM

According to the present invention, there is provided an electromagnetic proportional control valve for flow rate control that is disposed with a mover that moves in an axial direction inside a casing in response to an electric current flowing in a coil and proportionally controls the flow rate of a fluid by opening and closing a valve in response to the moving amount of the mover, wherein the electromagnetic proportional control valve for flow rate control is disposed with a fixed shaft that is fixed to the casing, the mover includes an insertion hole, both of whose axial direction end sides are open, and with a bearing member being disposed in the mover, and the fixed shaft is inserted into the insertion hole, whereby the mover is held in a state where the mover is slidable in the axial direction; thus, the aforementioned problem can be solved.

Further, in configuring the electromagnetic proportional control valve for flow rate control of the present invention, it is preferred that the bearing member is disposed on an inner peripheral surface of the insertion hole.

Further, in configuring the electromagnetic proportional control valve for flow rate control of the present invention, it is preferred that the bearing member is disposed on the entire inner peripheral surface of the insertion hole.

Further, in configuring the electromagnetic proportional control valve for flow rate control of the present invention, it is preferred that the mover is a rotational armature that is disposed with a fuel passage that includes a slanted portion that slants with respect to the axial direction.

Further, in configuring the electromagnetic proportional control valve for flow rate control of the present invention, it is preferred that the fixed shaft is a cantilever type fixed shaft that is fixed to the axial direction one end side of the casing.

Further, in configuring the electromagnetic proportional control valve for flow rate control of the present invention, it is preferred that the fixed shaft is press-inserted into and fixed to the inside of a recessed portion that is formed in the axial direction one end side of the casing.

Further, another aspect of the present invention is a fuel supply pump that pressurizes and pressure-feeds fuel while controlling its flow rate by an electromagnetic proportional control valve for flow rate control that is disposed with a mover that moves in an axial direction inside a casing in response to an electric current flowing in a coil and proportionally controls the flow rate of a fluid by opening and closing a valve in response to the moving amount of the mover, wherein the electromagnetic proportional control valve for flow rate control is disposed with a fixed shaft that is fixed to the casing, the mover includes an insertion hole, both of whose axial direction end sides are open, and with a bearing member being disposed in the mover, and the fixed shaft is inserted into the insertion hole, whereby the mover is held in a state where the mover is slidable in the axial direction.

### EFFECTS OF THE INVENTION

According to the present invention, the fixed shaft that is fixed to the casing is placed in the axial center of the mover to allow the mover to be slidingly held, whereby the centering precision of the fixed shaft can be improved. Further, because the centering precision improves, the clearance between the mover and the axial center and the clearance between the mover and the solenoid can be reduced, so the electromagnetic force that acts in the circumferential direction can be reduced. Consequently, control of the flow rate of the fluid can be stably performed because the smooth axial direction movement of the mover is no longer hindered.

Further, in the electromagnetic proportional control valve for flow rate control of the present invention, the bearing member is disposed on the inner peripheral surface of the insertion hole in the mover, whereby the axial direction length of the bearing member can be freely set without having to change the axial direction length of the mover, and the degree of freedom with which the bearing member may be disposed and configured can be raised.

Further, in the electromagnetic proportional control valve for flow rate control of the present invention, the bearing member is disposed on the entire inner peripheral surface of the insertion hole in the mover, whereby the surface pressure that is received from the fixed shaft can be dispersed, so sliding friction can be made even smaller.

Further, in the electromagnetic proportional control valve for flow rate control of the present invention, the mover is a rotational armature, whereby the contact surface between the fixed shaft and the bearing member disposed in the mover can be made easier to change. Consequently, even if an uneven load were to be applied to the mover, the bearing member can be allowed to contact the fixed shaft using the entire surface of the bearing member of the mover, and uneven wear of the bearing member can be prevented. As a result, the durability of the electromagnetic proportional control valve for flow rate control improves, and its reliability can be raised.

Further, in the electromagnetic proportional control valve for flow rate control of the present invention, the fixed shaft is a cantilever type fixed shaft, whereby the centering precision of the fixed shaft and the coil portion is not affected by the centering precision when assembling the casing and the barrel, so the occurrence of uneven wear of the fixed shaft or the mover can be prevented.

Further, in the electromagnetic proportional control valve for flow rate control of the present invention, the fixed shaft is press-inserted into the recessed portion that is formed in a predetermined place in the casing, whereby the centering precision of the fixed shaft can be raised while improving machinability.

Further, according to the fuel supply pump of the present invention, as the electromagnetic proportional control valve for flow rate control, the fuel supply pump is disposed with an electromagnetic proportional control valve for flow rate control where a predetermined fixed shaft is placed in the axial center of a mover to allow the mover to be slidingly held and with a bearing member being disposed in the mover, whereby the flow rate of the fuel can be stably controlled, the common rail pressure can be properly controlled, and drawbacks such as abnormal noise can be reduced.

### BRIEF DESCRIPTION OF THE DRAWINGS

[FIG. 1] A side diagram including a partial cutaway of a fuel supply pump pertaining to an embodiment of the present invention.
[FIG. 2] A cross-sectional diagram of an electromagnetic proportional control valve for flow rate control pertaining to the embodiment of the present invention.
[FIG. 3] A diagram provided for describing a slit in a valve member.
[FIG. 4] A diagram showing an electric current/flow rate control characteristic of the electromagnetic proportional control valve for flow rate control of the embodiment.
[FIG. 5] A diagram provided for describing an assembled state of a fixed shaft and a mover.
[FIG. 6] Diagrams showing examples of the configuration of the fixed shaft.
[FIG. 7] Diagrams showing other examples of the configuration of the fixed shaft.
[FIG. 8] Diagrams showing examples of the disposition of a bearing member in the mover.
[FIG. 9] Diagrams showing an example of the configuration of a rotational armature.
[FIG. 10] Diagrams showing another example of the configuration of the rotational armature.
[FIG. 11] A diagram provided for describing an accumulator fuel injection system with a pressure amplifying piston (APCRS).
[FIG. 12] A diagram provided for describing the configuration of a conventional flow rate control valve.
[FIG. 13] A diagram provided for describing a conventional rotatable mover.

### BEST MODE FOR IMPLEMENTING THE INVENTION

An embodiment of the present invention is a fuel supply pump that pressurizes and pressure-feeds fuel while controlling its flow rate by an electromagnetic proportional control valve for flow rate control (below, sometimes simply called a "flow rate control valve") that is disposed with a mover that moves in an axial direction inside a casing in response to an electric current flowing in a coil and proportionally controls the flow rate of a fluid in response to the moving amount of the mover.
In this fuel supply pump, the electromagnetic proportional control valve for flow rate control is disposed with a fixed shaft that is fixed to the casing, the mover includes an insertion hole, both of whose axial direction end sides are open, and with a bearing member being disposed in the mover, and the fixed shaft is inserted into the insertion hole, whereby the mover is held in a state where the mover is slidable in the axial direction.
Below, the fuel supply pump of the present embodiment will be specifically described with reference to the drawings. However, this embodiment represents one aspect of the present invention, is not intended to limit this invention, and is capable of being arbitrarily altered within the scope of the present invention.
It will be noted that, in each of the drawings, members to which identical reference numerals have been added represent identical members, and description will be appropriately omitted.

### 1. Fuel Supply Pump

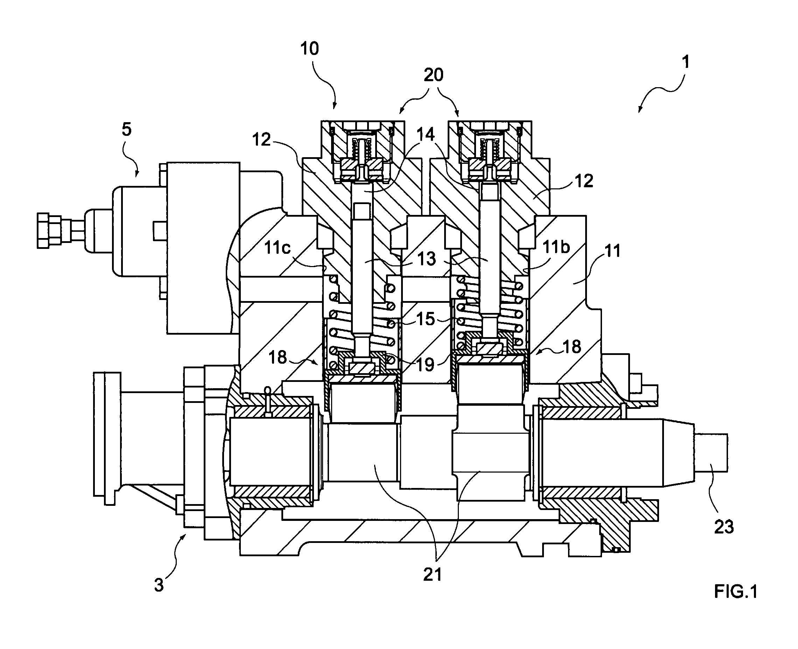

The overall configuration of the fuel supply pump of the present invention is not particularly limited, and one example of the fuel supply pump of the present embodiment is shown in FIG. 1. This fuel supply pump 1 is a so-called line type pump where cylinders (cylindrical spaces) 11b and 11c, in which plungers 13 that pressurize fuel are disposed, are disposed in parallel, and the fuel supply pump 1 is disposed with a pump body portion 10 that pressurizes fuel to a high pressure and pressure-feeds the high pressure fuel, a feed pump 3 for sucking up the fuel from a fuel tank (not shown), and a flow rate control valve 5 for regulating the flow rate of the fuel that is to be pressurized.
It will be noted that the example of this fuel supply pump 1 has a configuration that uses the two plungers 13 to pressurize the fuel to a high pressure and pressure-feed the high pressure fuel, but the number of the plungers can also be increased to an even greater number in order to pressurize an even larger amount of fuel to a high pressure.

The feed pump 3 is a part for sucking up the fuel inside the fuel tank and delivering the fuel with respect to the flow rate control valve 5. This feed pump 3 comprises a gear pump structure that includes a drive gear that is coupled to an end portion of a cam shaft 23 and a passive gear that is coupled to the drive gear, for example, and the feed pump 3 is driven via an appropriate gear ratio or directly coupled to the cam shaft 23. This feed pump 3 is driven, whereby the fuel is sucked up from the fuel tank and delivered with respect to the flow rate control valve 5 utilizing negative pressure.
Further, when a main filter (not shown) is intervened between the feed pump 3 and the pump body portion 10 and foreign particles are mixed in with the fuel inside the fuel tank, those foreign particles can be primarily trapped such that they do not flow into the inside of the pump body portion 10.

The flow rate control valve 5 is attached to the pump body portion 10 and is a part which, when delivering the fuel that has been delivered from the feed pump 3 to fuel pressurization chambers 14 of the pump body portion 10, is for regulating the flow rate of that fuel. In particular, in the present invention, as this flow rate control valve 5, there is used the flow rate control valve 5 that is disposed with a fixed shaft that is fixed to the casing, the mover includes an insertion hole, both of whose axial direction end sides are open, and with a bearing member being disposed in the mover, and the fixed shaft is inserted into the insertion hole, whereby the mover is held in a state where the mover is slidable in the axial direction. The details of the flow rate control valve will be described later.

Further, although it is not illustrated, the fuel supply pump is disposed with an overflow valve that branches from the middle of a fuel passage that interconnects the feed pump and the flow rate control valve and is disposed in parallel with the flow rate control valve. Because of this overflow valve, when the pressure of the fuel that is delivered to the flow rate control valve exceeds a stipulated value or when the flow rate of the fuel that is delivered to the flow rate control valve exceeds a stipulated amount, the fuel can be refluxed to the fuel tank or the like via the overflow valve.
At this time, the fuel that flows to the overflow valve can also be delivered to the inside of a later-described cam chamber of the pump body portion and be used as a lubricant. Thus, the fuel can be effectively utilized without having to separately supply lubricating oil or the like as a lubricant inside the cam chamber, and an increase in the size of the entire fuel supply pump and an increase in the complexity of its configuration can be prevented.

The pump body portion 10 is a part for pressurizing the fuel that is delivered via the flow rate control valve 5 to a high pressure and pressure-feeding the high pressure fuel to a common rail or the like on the downstream side. The pump body portion 10 is, for example, disposed with a pump housing 11, plunger barrels 12 that are attached inside the cylindrical spaces 11b and 11c in the pump housing 11, the plungers 13 that are slidingly held in inner spaces in the plunger barrels 12, springs 15 whose both ends are locked to the plunger barrels 12 and spring seats 19 and which are for energizing the plungers 13 downward, and tappet structure bodies 18 that are intervened between the plungers 13 and cams 21 and are for centering and pushing up the plungers 13 in accompaniment with the rotation of the cams 21. Further, fuel inlet valves 20 are disposed in upper open portions of the inner spaces in the plunger barrels 12, and fuel outlet valves (not shown) are disposed via fuel passages (not shown) that extend sideways from the inner spaces in the plunger barrels 12.

Further, parts of the inner spaces in the plunger barrels 12 form the fuel pressurization chambers 14 that are closed off by the inner peripheral surfaces of the plunger barrels 12, the plungers 13 and the fuel inlet valves 20. Additionally, the fuel that is supplied via the fuel inlet valves 20 is pressurized to a high pressure inside these fuel pressurization chambers 14 by the plungers 13 that are pushed up in accompaniment with the rotational movement of the cams 21 and is pressure-fed to the common rail or the like on the downstream side via the fuel outlet valves.

### 2. Electromagnetic Proportional Control Valve for Flow Rate Control (Flow Rate Control Valve)

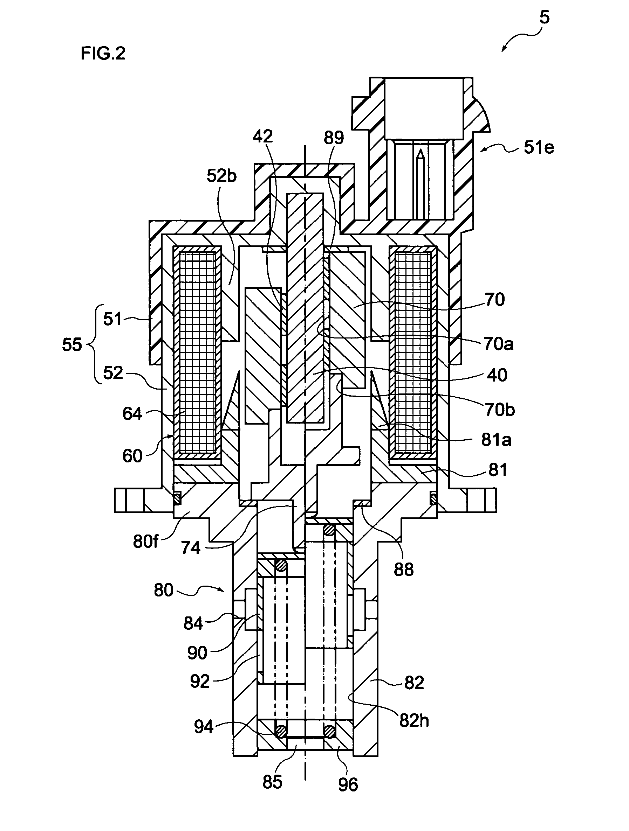

FIG. 2 shows a cross-sectional diagram of the flow rate control valve 5 of the present embodiment. This FIG. 2 shows two states of a mover 70 by half sections in order to facilitate understanding of the movement of the mover 70.
This flow rate control valve 5 is disposed with a casing 55 that is configured by a resin portion 51 that includes an input socket portion 51e and by a case 52 that comprises a magnetic material that is integrated with the resin portion 51, with one axial line direction end of the casing 55 being closed and the other end being open. Further, a cylinder portion 52b is disposed on one end side of the case 52 that configures the casing 55, a solenoid 60 that includes a coil 64 is disposed on the inner periphery of the casing 55, and the mover 70 that comprises a magnetic material is disposed on the inner periphery of the cylinder portion 52b and the solenoid 60 such that there is an appropriate clearance with respect to the cylinder portion 52b and a magnetic core 81. The coil 64 is electrically connected to the input socket portion 51e and is energized from the outside. In the configuration of the flow rate control valve 5 shown in FIG. 2, the cylinder portion 52b is disposed in the case 52, but as mentioned later, the flow rate control valve 5 can also be configured such that this cylinder portion is omitted.

Further, a barrel 80 that comprises a cylinder body that includes a flange portion 80f is fitted together with the open portion of the casing 55 to close the opening. That is, the barrel 80 configures a housing of the flow rate control valve 5 together with the casing 55. The magnetic core 81 is attached to the casing 55 side of this barrel 80. An axial direction portion 81a of the magnetic core 81 is disposed on the inner periphery of the solenoid 60, is disposed such that there is a proper clearance with the mover 70, and is disposed such that there is a sufficient clearance, through which direct magnetic flux is not transmitted without involving the mover 70, with the cylinder portion 52b. Further, the outer periphery of the flange portion 80f of the magnetic core 81 is fitted together with the case 52 that comprises a magnetic material to configure an electromagnetic circuit.
In the flow rate control valve 5 shown in FIG. 2, the barrel 80 and the magnetic core 81 are configured as separate members, but these may also be integrated and configured using a magnetic material.

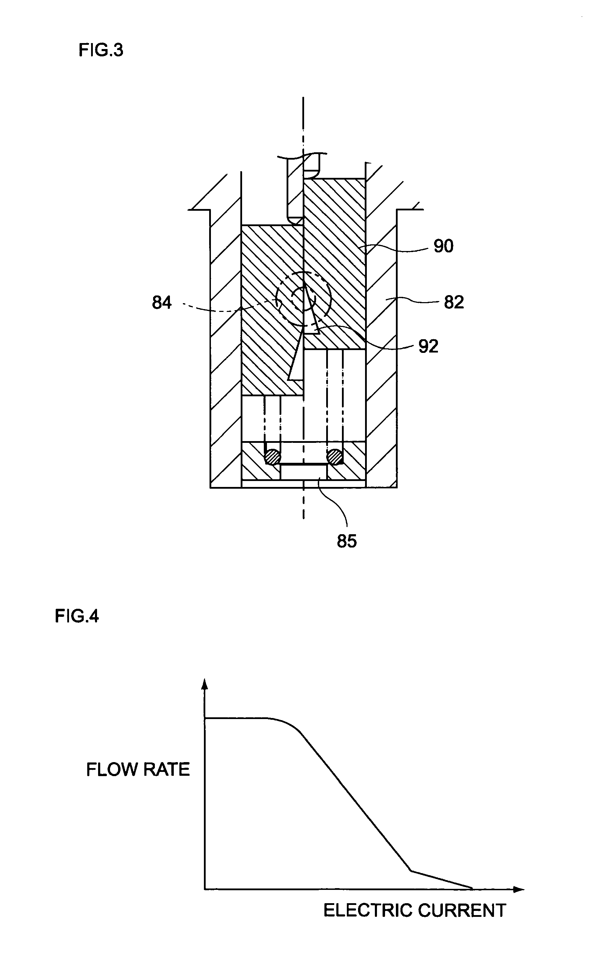

Further, a valve member 90 that comprises a piston is movably housed in a hole 82h in a cylinder portion 82 of the barrel 80. As shown in FIG. 3, this valve member 90 includes a triangular slit 92, and that slit 92 is communicable with a port 84 that communicates with a feed pump (not shown) and a passage 85 that communicates with a supply pump (not shown) . The shape of this slit 92 is not limited to a triangular shape; it suffices for its open area to change in response to the lift amount of the valve member 90, and appropriate changes are possible.
Further, as shown in FIG. 2, one end of the valve member 90 abuts against the distal end of a push rod 74 that comprises a non-magnetic material on the mover 70 side, a coil spring 94 is held between the valve member 90 and a spring receiver 96 that is press-inserted into the open portion of the cylinder portion 82, and the valve member 90 is always energized toward the mover 70 by this coil spring 94. The spring force resulting from the coil spring 94 is in balance with the electromagnetic force that accompanies excitation of the solenoid 60, but it is configured such that it can move the mover 70 in the axial direction through the valve member 90 when the electromagnetic force does not arise.

Further, a ring-shaped spacer 88 is disposed on the end surface of the barrel 80 on the casing 55 side. Because of this spacer 88, the axial direction moving distance of the mover 70 can be adjusted. However, the flow rate control valve 5 can also be configured such that this spacer 88 is omitted.
Further, a washer 89 is disposed on the casing 55 inner surface side of the axial direction moving end of the mover 70 on the side that opposes the spacer 88. This washer 89 becomes an electromagnetic force seal portion between the casing 55 and the mover 70 and prevents the mover 70 and the case 52 from being excessively attracted to each other by magnetic force so that the smooth slidability of the mover 70 is ensured.

In the flow rate control valve 5 of this configuration, when the mover 70 moves in the axial direction by the electromagnetic force that accompanies excitation of the solenoid 60, the push rod 74 enters the inside of the magnetic core 81 toward the hole 82h in the cylinder portion 82. Additionally, the direction in which the coil spring 94 bends and the end surface of the mover 70 approaches the spacer 88 is an idling state of an internal combustion engine, and when the coil spring 94 pushes the valve member 90 such that the mover 70 moves away from the spacer 88, the internal combustion engine is in a high speed operating state. FIG. 4 shows an example of a control characteristic where electric current is represented by the horizontal axis and flow rate is represented by the vertical axis. It goes without saying that, conversely from this characteristic, the control characteristic can also be made into a control characteristic where the flow rate is increased as the electric current increases. In the flow rate control valve configured in this manner, in order to obtain a high-precision control characteristic and rapid response, it is necessary to cause the mover to move as smoothly as possible.

Here, it is necessary to guide the mover to enable the mover to move in an appropriate direction such that the mover does not contact the solenoid by magnetic force and such that the smooth movement of the mover is not hindered. However, when guide portions are disposed on the casing and the barrel so as to guide the spindle of the mover as has conventionally been the case, machining precision of the guide portions of the casing and the barrel is required and centering precision when assembling the casing and the barrel is required. Consequently, when the machining precision or the assembly precision is low, an uneven load is applied to the spindle of the mover and the guide portions, even wear occurs, and the smooth slidability of the mover ends up becoming lost. For that reason, it is necessary to ensure as much as possible that an uneven load is not applied to the mover.

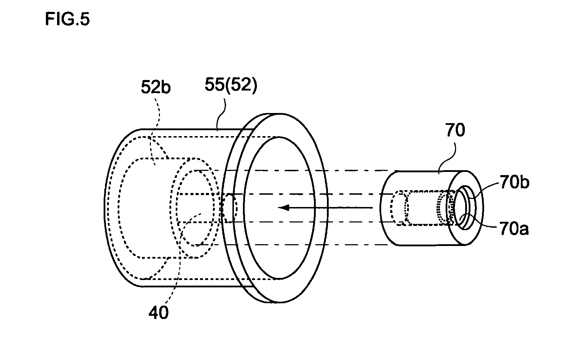

Thus, the flow rate control valve 5 pertaining to the present invention is, as shown in FIG. 2, disposed with a fixed shaft 40 that is fixed to the casing 55, the mover 70 includes an insertion hole 70a, both of whose axial direction end sides are open, and with a bearing member 42 being disposed in the mover 70, and the fixed shaft 40 is inserted into the insertion hole 70a, wherein the mover 70 is held in a state where the mover 70 is slidable in the axial direction. In order to make it easier to understand the relationship between the fixed shaft and the mover, FIG. 5 shows the fixed shaft 40 that is fixed to the casing 55 (the case 52) being inserted and assembled with respect to the insertion hole 70a in the mover 70. In this FIG. 5, members other than the case 52, the fixed shaft 40 and the mover 70 are omitted.
By placing the fixed shaft 40 in the axial center of the mover 70 in this manner, shifting of the axial centers of the mover 70 and the fixed shaft 40 during assembly can be eliminated. Further, when the fixed shaft is the fixed shaft 40 that is fixed to the casing 55 of the flow rate control valve 5, the rod-like fixed shaft 40 that is concentric with the space in which the solenoid 60 is disposed can be formed easily, so centering with the inner peripheral surface of the solenoid 60 can be performed precisely. Consequently, it becomes possible to cause the mover 70 to move smoothly in the axial direction without applying an uneven load to the mover 70.

Further, in the flow rate control valve 5 of the present invention, the centering precision of the mover 70 and the fixed shaft 40 and the centering precision of the mover 70 and the solenoid 60 can be raised, so the clearance between the fixed shaft 40 and the bearing member 42 disposed in the mover 70 can be designed to be small. When this clearance is set to be small, the electromagnetic force that acts in the axial direction can be reduced, so the mover 70 can be caused to move more smoothly in the axial direction.
Moreover, in the flow rate control valve 5 of the present invention, the bearing member 42 is disposed in the mover 70, so even if there were a state where an uneven load is applied, the pressure receiving surface of the bearing member 42 can be allowed to change in accompaniment with the rotational position of the mover 70 that is slidingly held on the fixed shaft 40 changing. Consequently, uneven wear of the bearing member 42 can be prevented and wear resistance can be dramatically improved.

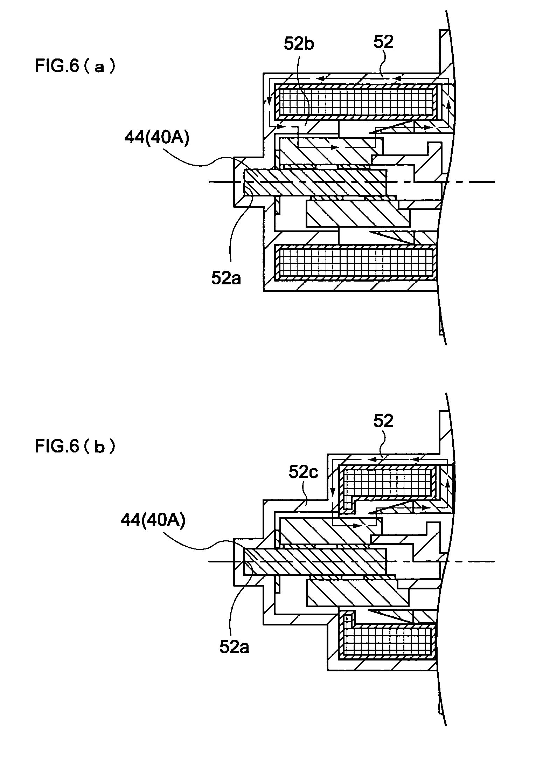

The fixed shaft that is fixed to the casing can, for example, as shown in FIG. 6(a), be configured as a fixed shaft 40A where a recessed portion 52a is formed in one axial direction end side of the case 52 that configures the casing and where a spindle 44 that comprises a non-magnetic material is press-inserted into and fixed to this recessed portion 52a. When the fixed shaft is this fixed shaft 40A, machining of the recessed portion 52a while centering is easy, and the centering precision of the fixed shaft 40A can be raised remarkably by press-inserting the spindle 44 whose machining precision is high.
Further, when a spindle that comprises a non-magnetic material is press-inserted into the case to configure the fixed shaft 40A, as shown in FIG. 6(b), the case can also be configured such that a circumferential direction step portion 52c that is separate from the recessed portion 52a into which the spindle 44 is press-inserted is formed in the case 52 and given a cylindrical shape. Even when the case is configured in this manner, an appropriate electromagnetic circuit can be formed.

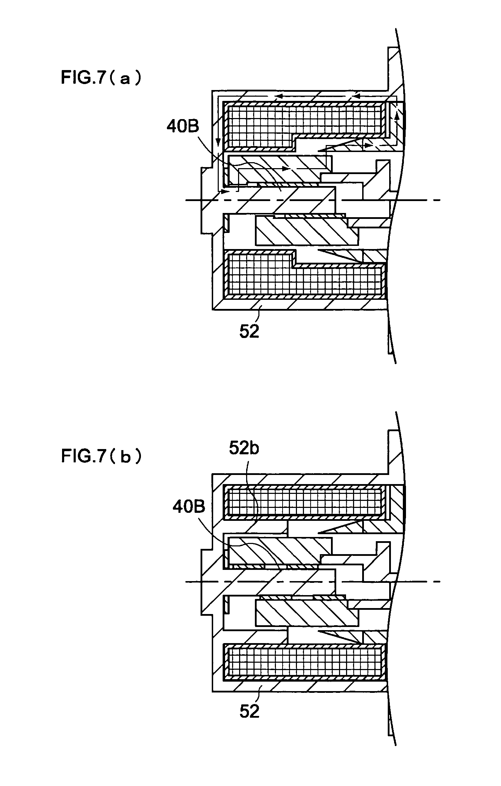

Further, as shown in FIG. 7(a), the fixed shaft can also be configured as a fixed shaft 40B that is formed by integral machining when manufacturing the case 52 that configures the casing. When the fixed shaft is this fixed shaft 40B, machining while centering is easy, so the centering precision can be raised remarkably, there is no increase in the number of parts, and there is also no increase in the number of assembly steps. Further, because the fixed shaft has a configuration where the fixed shaft 40B itself comprises a magnetic material, an appropriate electromagnetic circuit can be formed even when the cylinder portion is omitted. However, even when the fixed shaft is configured as the fixed shaft 40B that is integrated with the case 52, as shown in FIG. 7(b), the case 52 may also be configured so as to be disposed with the cylinder portion 52b.

In particular, as shown in these FIG. 6 and FIG. 7, when the fixed shafts 40A and 40B are cantilever type fixed shafts 40A and 40B that are fixed to one axial direction end side of the case 52 that configures the casing, even when positional precision when assembling the barrel is somewhat low, centering during assembly of the mover and the fixed shaft is not at all affected, so this is a preferred aspect.
It will be noted that, although it is not illustrated, the fixed shaft may also be configured such that it is fixed also to the barrel in conjunction with the casing. However, in this case, it is necessary to configure the fixed shaft such that passage of the fuel inside the flow rate control valve and pushing of the valve member by the mover are not obstructed.

Further, in relation to the mover that moves in the axial direction by the energizing force of the coil spring and the electromagnetic force that accompanies excitation of the solenoid, the outer shape thereof is not particularly limited as long as it is a substantially circular cylinder shape. The mover 70 that is used in the flow rate control valve 5 shown in FIG. 2 is the circular cylinder-shaped mover 70, with a recessed portion 70b that follows the edge of the insertion hole 70a being formed in one end portion and fitted together with a fitting portion 74a of the push rod 74.

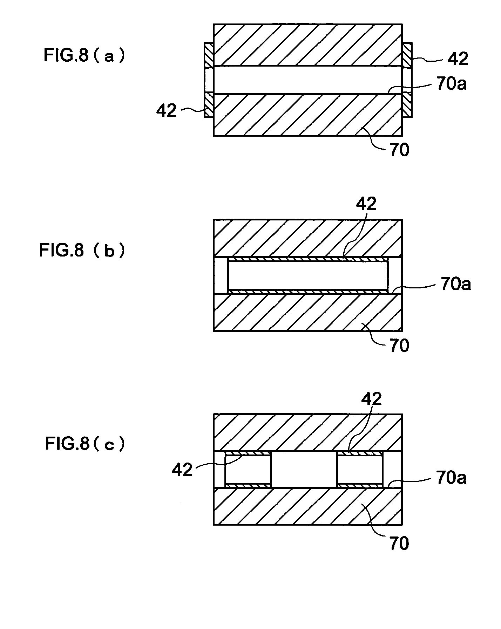

Further, the bearing member that is disposed in the mover can be disposed as shown in FIG. 8(a) to (c). Among these, as shown in FIG. 8 (b) and (c), it is preferable for the bearing member to be disposed on the inner peripheral surface of the insertion hole 70a that is formed in the mover 70. By disposing the bearing member 42 in this position, there is no change in the axial direction size of the mover 70, and the range of selection of the axial direction length of the bearing member 42 that is to be disposed is widened.
For example, FIG. 8(b) is an example where the bearing member 42 is disposed on the entire inner peripheral surface of the insertion hole 70a in the mover 70. By disposing the bearing member in this manner, the sliding area with the fixed shaft becomes larger and the surface pressure that is received from the fixed shaft can be made small. Consequently, the sliding friction of the bearing member 42 of the mover 70 can be made small, the mover 70 can be caused to move smoothly in the axial direction, wear of the fixed shaft and the bearing member 42 can be controlled, and reliability can be improved.
Further, FIG. 8(c) is an example where, although the bearing member 42 is not disposed on the entire inner peripheral surface of the insertion hole 70a in the mover 70, a plurality of the bearing members 42 are disposed in the vicinities of both axial direction end sides. By disposing the bearing members 42 in this manner, a situation where a load is partially received can be prevented and sliding friction can be reduced even if variations were to arise in the thicknesses of the bearing members 42.

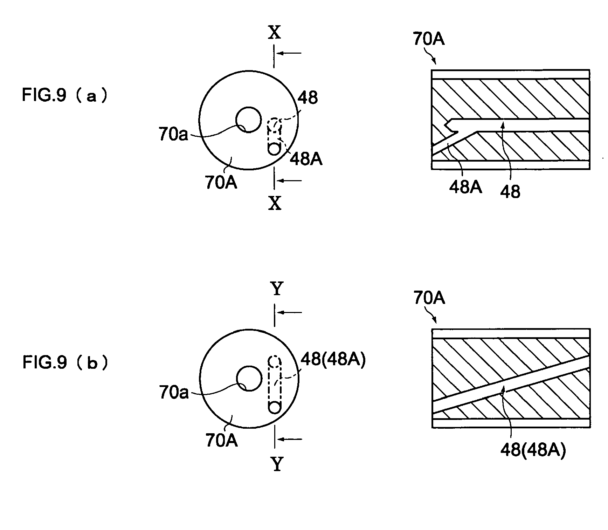

Further, it is preferable for the mover to be a rotational armature 70A that is disposed with a fuel passage 48 that includes a slanted portion 48A that slants with respect to the axial direction, such as shown by one example in FIG. 9(a) to (b). That is, when there is assumed a cross section that includes a central axis and follows the axial direction of the mover, it is preferable to disposed the slanted portion 48A in at least part of the fuel passage 48 such that all of the fuel passage 48 does not appear on this cross section. In this manner, when the mover is the mover 70A that is rotatable about its axial line using the flow of the fuel, it becomes easy to change the contact position of the bearing member 42 with respect to the fixed shaft, and the fixed shaft or the bearing member 42 of the mover 70A wears across its entirety in the circumferential direction, so localized uneven wear can be effectively prevented.

Further, when enabling the mover to be rotatable about its axial line utilizing the flow of the fuel inside the fuel passage in this manner, when the mover 70A moves on its axial line, it is preferable to cause all of the fuel that is replaced from the front to the back of the mover 70A to pass through the fuel passage 48. In particle, when the configuration is the configuration of the flow rate control valve 5 of the present invention, the centering precision of the mover 70A, the fixed shaft and the solenoid can be raised and the clearance between the mover 70A and the solenoid can be set to be small, so the amount of fuel that flows through the fuel passage is increased and more rotational force can be obtained.
However, when the clearance between the mover and the solenoid is made too small, the circumferential direction electromagnetic force ends up becoming too large, so in this case, it is preferable to dispose a spacer member on the solenoid or the mover in order to ensure the slidability of the mover.

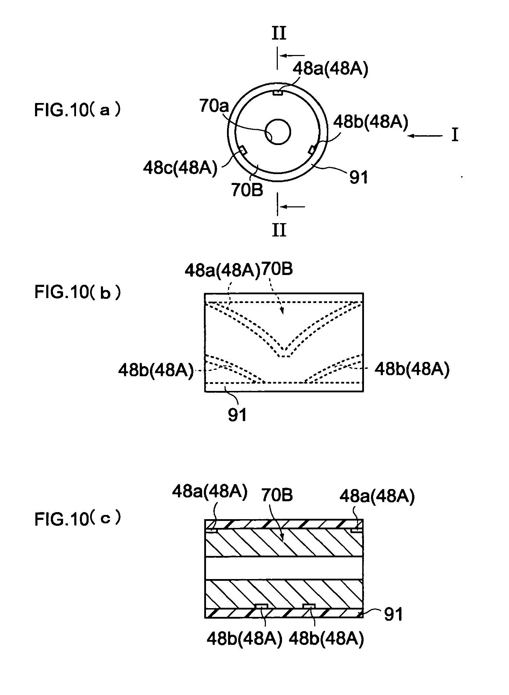

The fuel passage 48 that includes the slanted portion 48A can be formed by forming a hole inside the mover or by partially transforming or changing the periphery of the mover. Among these, as shown in FIG. 10(a) to (c), by forming the fuel passage 48 that includes slanted portions 48a to 48c in the outer periphery of the mover 70A that comprises a magnetic material and covering the mover with a spacer member 91 that comprises a non-magnetic material, the degree of freedom with which the fuel passage 48 may be disposed can be raised remarkably in comparison to when a hole is formed inside.

### 3. Example of Use in an Accumulator Fuel Injection System with a Pressure-Amplifying Piston

The fuel supply pump of the present invention that has been described up to now can be suitably used as a fuel supply pump that is used in an accumulator fuel injection system with a pressure amplifying piston (APCRS) that further amplifies, with a pressure amplifying piston, the pressure of high pressure fuel that has been supplied from a pressure accumulator (common rail) and thereafter injects that fuel from injectors.

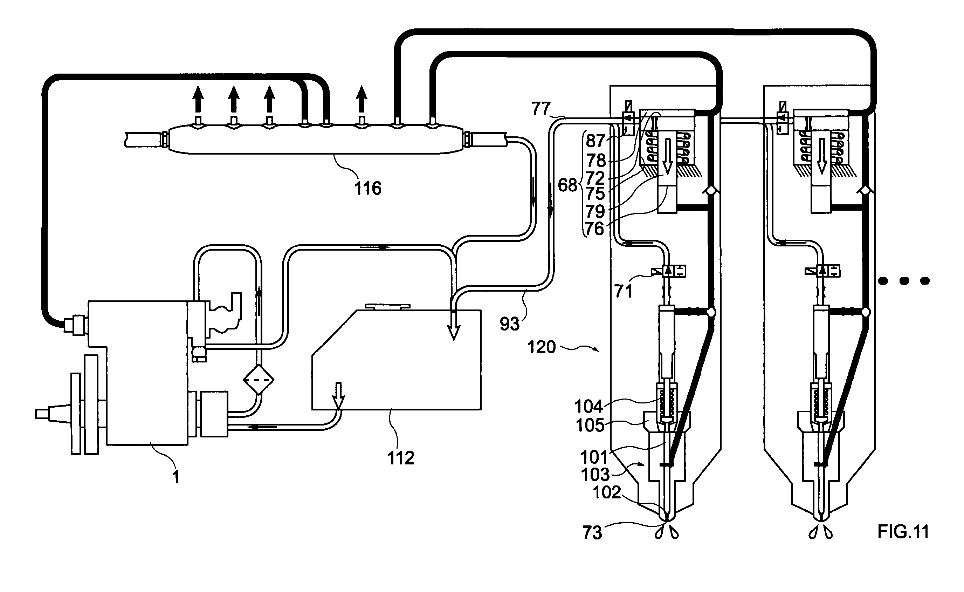

FIG. 11 shows an example of the configuration of an APCRS. This APCRS is configured by a fuel tank 112, the fuel supply pump 1 that pressurizes the fuel inside the fuel tank 112 to a high pressure and pressure-feeds the high pressure fuel, a pressure accumulator (common rail) 116 for pressure-accumulating the high pressure fuel that has been pressure-fed from this fuel supply pump 1, pressure amplifying devices (pressure amplifying pistons) 68 for further amplifying the pressure of the fuel that has been pressure-accumulated by the common rail 116, and injectors 120.

The configuration of the common rail 116 is not particularly limited, and a publicly known configuration can be used. The plural injectors 120 are connected to the common rail 116, the fuel that has been pressurized to a high pressure by the fuel supply pump 1 is supplied equally with respect to all of the injectors 120, and the injectors 120 are controlled such that the injectors 120 can be caused to inject the fuel at a desired injection timing to an internal combustion engine (not shown). Because the APCRS is disposed with this common rail 116, the fuel can be injected to the engine via the injectors 120 with an injection pressure that is commensurate with the number of rotations without the rotation of the pump directly affecting the injection pressure.
Further, a pressure sensor (not shown) is connected to the common rail 116, and a pressure sensing signal obtained by this pressure sensor is sent to an electronic control unit (ECU: Electrical Controlling Unit). Additionally, the ECU receives the pressure sensing signal from the pressure sensor and controls an electromagnetic control valve (not shown) that is similarly disposed in the common rail 116 such that the common rail pressure becomes a predetermined pressure.

Further, each of the pressure amplifying devices can be given a configuration which, as exemplified in FIG. 11, includes a cylinder 75, a mechanical piston (pressure amplifying piston) 79, a pressure reception chamber 78, an electromagnetic valve 87 and a circulation path 77, with the mechanical piston 79 being disposed with a pressure receiver 72 and a pressurizer 76 whose area is relatively smaller than that of the pressure receiver 72.
In each of these pressure amplifying devices, the mechanical piston 79 that is housed inside the cylinder 75 is pushed by fuel that has the common rail pressure in the pressure receiver 72 and moves, such that the pressure of the fuel inside the pressure reception chamber 78 is amplified by the pressurizer 76.

Each of the pressure amplifying devices 68 uses in large quantity the fuel that has the common rail pressure in order to push the mechanical piston 79, but after pressurization, the fuel is refluxed to the fuel tank 112 via the electromagnetic valve 87. That is, a large portion of the fuel that has the common rail pressure pushes the mechanical piston 79 and is thereafter refluxed to the fuel tank 112 via a line 93 so that, for example, the fuel can again be used as high pressure fuel.
On the other hand, fuel whose pressure has been amplified by the pressurizer 76 is sent to a nozzle 73 of the injector 120 and injected, and fuel that has been used in back pressure control of the injector 120 and discharged from the electromagnetic valve 71 becomes refluxed to the fuel tank 112 via the line 93.
By disposing this pressure amplifying device, the mechanical piston can be effectively pushed by the fuel that has the common rail pressure in an arbitrary time period and without making the common rail excessively large.

Further, the configuration of the injectors 120 is not particularly limited and can, as exemplified in FIG. 11, for example, be given a configuration that is disposed with a nozzle body 103 that includes a seat surface 102 on which a needle valve body 101 sits and an injection hole 73 that is formed further on the downstream side than the valve body abutment portion of this seat surface 102, with the injector 120 guiding, to the injection hole 73, fuel that is supplied from the upstream side of the seat surface 102 when the needle valve body 101 lifts.
Further, the injectors 120 can be configured as an electromagnetic valve type where the needle valve body 101 is always energized toward the seat surface 102 by a spring 104 or the like and where the needle valve body 101 is opened and closed by switching between energization/no energization of a solenoid 105.

In this pressure amplifying accumulator fuel injection system, an ejection amount of a large flow rate is required of the fuel supply pump, but in order to maintain controllability, there are many instances where a large control electric current and a large mover moving amount are required and, as a result, it becomes easy for the electromagnetic force that acts in the circumferential direction to become large. Even in such an accumulator fuel injection system, by using the fuel supply pump that is disposed with the electromagnetic proportional control valve for flow rate control as described above, the flow rate of the fuel that is to be pressurized to a high pressure and pressure-fed can be stably controlled, and the common rail pressure can be stably controlled. Consequently, drawbacks such as the pulsation of the common rail pressure becoming unstable such that abnormal noise arises or the amount of harmful substances that are included in the exhaust gas becoming large can be prevented.

### INDUSTRIAL APPLICABILITY

As described above, according to the electromagnetic proportional control valve for flow rate control of the present invention, there can be provided an electromagnetic proportional control valve for flow rate control that can enable the smooth axial direction movement of a mover, reduce the occurrence of uneven wear resulting from an uneven load, and stably perform flow rate control.
Consequently, in the preceding embodiment, although a flow rate control valve for controlling the flow rate of fuel that is supplied to an internal combustion engine has been taken as an example and described, in addition to this, the flow rate control valve can also be used in various fields mainly for the purpose of controlling the flow rate of a fluid.

## Claims

1. An electromagnetic proportional control valve for flow rate control that is disposed with a mover that moves in an axial direction inside a casing in response to an electric current flowing in a coil and proportionally controls the flow rate of a fluid by opening and closing a valve in response to the moving amount of the mover, wherein
the electromagnetic proportional control valve for flow rate control is disposed with a fixed shaft that is fixed to the casing,
the mover includes an insertion hole, both of whose axial direction end sides are open, and with a bearing member being disposed in the mover, and
the fixed shaft is inserted into the insertion hole, whereby the mover is held in a state where the mover is slidable in the axial direction.

2. The electromagnetic proportional control valve for flow rate control according to claim 1, wherein the bearing member is disposed on an inner peripheral surface of the insertion hole.

3. The electromagnetic proportional control valve for flow rate control according to claim 2, wherein the bearing member is disposed on the entire inner peripheral surface of the insertion hole.

4. The electromagnetic proportional control valve for flow rate control according to any one of claims 1 to 3, wherein the mover is a rotational armature that is disposed with a fuel passage that includes a slanted portion that slants with respect to the axial direction.

5. The electromagnetic proportional control valve for flow rate control according to any one of claims 1 to 4, wherein the fixed shaft is a cantilever type fixed shaft that is fixed to the axial direction one end side of the casing.

6. The electromagnetic proportional control valve for flow rate control according to claim 5, wherein the fixed shaft is press-inserted into and fixed to the inside of a recessed portion that is formed in the axial direction one end side of the casing.

7. A fuel supply pump that pressurizes and pressure-feeds fuel while controlling its flow rate by an electromagnetic proportional control valve for flow rate control that is disposed with a mover that moves in an axial direction inside a casing in response to an electric current flowing in a coil and proportionally controls the flow rate of a fluid by opening and closing a valve in response to the moving amount of the mover, wherein
the electromagnetic proportional control valve for flow rate control is disposed with a fixed shaft that is fixed to the casing,
the mover includes an insertion hole, both of whose axial direction end sides are open, and with a bearing member being disposed in the mover, and
the fixed shaft is inserted into the insertion hole, whereby the mover is held in a state where the mover is slidable in the axial direction.
